# EUROPEAN PATENT SPECIFICATION

(11) **EP 3 164 983 B1**
(45) Date of publication and mention of the grant of the patent: **16.05.2018**
(21) Application number: 15736805.1
(22) Date of filing: 30.06.2015
(51) Int. Cl.: H04L 29/08, G05B 19/414

(54) **METHODS AND SYSTEMS FOR FACILITATING COMMUNICATION IN A WORK TOOLS NETWORK ENVIRONMENT**
VERFAHREN UND SYSTEME ZUR ERMÖGLICHUNG DER KOMMUNIKATION IN EINER ARBEITSWERKZEUGNETZWERKUMGEBUNG
PROCÉDÉS ET SYSTÈMES DE COMMUNICATION DANS UN ENVIRONNEMENT DE RÉSEAU D'OUTILS DE TRAVAIL

(30) Priority: 03.07.2014 SE 1450838
(43) Date of publication of application: 10.05.2017
(73) Proprietor: Atlas Copco Industrial Technique AB, 105 23 Stockholm Sweden (SE)
(72) Inventor: JONSSON, Bo, S-13835 Älta (SE)
(74) Representative: Tholin, Thomas
(86) International application number: PCT/EP2015/064815
(87) International publication number: WO 2016/001210

(56) References cited:
- US-A1- 2003 182 396

## Description

### Technical field

The present solution relates to a system and method for controlling work tools in a work tool system.

### Background art

Work tools and systems with work tools, including portable work tools such as power wrenches operated by an operator, are often used in production work. A common application is in assembly lines. Work tools in assembly lines may have a controller connected to them and the controller is adapted to control the work performed by the tool so that the tool works automatically. The controller sees to that the tool is operated correctly, e.g. performing a wrench operation with the correct torque etc.

Previously, when it has been needed to collect or update data related to tool controllers in an environment where there are many tool controllers, an operator has needed to connect to one controller at a time, which is very time Document US 2003/182396 A1 (REICH DANIEL [US] ET AL) 25 September 2003 (2003-09-25) discloses a communication node that does not assign an identifier to each server and each controller, the communication node contains the server and has the addresses of the controllers. The communication node maintains an open session with each controller .

It would therefore be desirable to improve upon at least some of the problems with current work tool systems.

### Summary

It is an object of the solution to address at least some of the problems and issues outlined above. It is possible to achieve these objects and others by using methods, tools servers and tool controllers as defined in the attached independent claims.

According to an aspect, a system for a work tools communications network is provided. The system is as described in claim 1.

According to a second aspect, a method for communication in a work tool communications network is provided, as described in claim 9.

According to a third aspect, a communication node for use in a work tool communications network is provided, as described in claim 17.

According to a fourth aspect, there is provided a computer program product as described in claim 25.

According to a fifth aspect, there is provided a method for communication in a work tool communications network as described in claim 33.

By implementing a solution as described herein, communication in a tool environment may be improved. The communication node may facilitate communication between entities, for instance by removing the need for multiple entities to know the location, such as the Internet Protocol address, and/or properties of other entities, since this may be handled by the communication node. The solution may also improve communication in a network with multiple servers and controllers, by directing all communication via the communication node instead of having different communication for each server and controller. Further, it may facilitate updating a tool network with new equipment, such as servers and controllers, since the communication node may enable communications between entities that otherwise may not have been compatible. This is also advantageous when updating and/or changing versions of servers and controllers, since the communication node enables entities with different versions to communicate with each other.

The above methods and apparatuses may be configured and implemented according to different optional embodiments. Further possible features and benefits of this solution will become apparent from the detailed description below.

### Short description of the drawings

The solution will now be described in more detail, by way of example, with reference to the accompanying drawings, in which:
Fig. 1 is a block diagram of a work tools communication system according to an embodiment.
Fig. 2 is a flow chart of a method performed in a work tools communication system for facilitating communication between a tool server and a plurality of tool controllers via a communication node according to a first embodiment.
Fig. 3 is a flow chart of a method performed in a work tools communication system for facilitating communication between a tool server and a plurality of tool controllers via a communication node according to a second embodiment.
Fig. 4 is a flow chart of a method performed in a work tools communication system for facilitating communication between a tool server and a plurality of tool controllers via a communication node according to a third embodiment.
Fig. 5 is a flow chart of a method performed by a communication node according to a fourth embodiment.
Fig. 6 is a block diagram illustrating a server and a controller in more detail according to some embodiments.

### Description of embodiments

In the following, a detailed description of the different embodiments of the solution is disclosed with reference to the accompanying drawings. All examples herein should be seen as part of the general description and are therefore possible to combine in any way in general terms. Individual features of the various embodiments and methods may be combined or exchanged unless such combination or exchange is clearly contradictory to the overall function of the implementation.

A system is provided to enable remote configuration, control and data collection of controllers for work tools. In an environment where a number of work tools are used, normally controlled by controllers, the work tools are configurable for different operations. A specific work tool may further be a part of a work station with material for production, arrangements for material handling, the work tool, different equipment for the tool, interaction devices for work tool operation such as indicator lamps, displays and so forth.

Briefly described, the solution relates to systems and methods for communication in a tool environment. The solution will now be described more in detail with reference to the accompanying drawings.

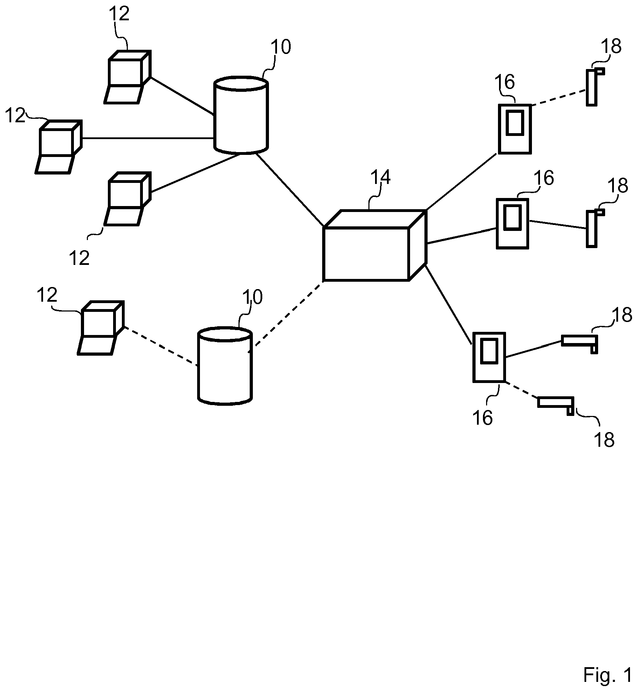

Fig. 1 shows a tool communication system comprising a plurality of tool controllers 16 for control, supervision and/or collection of result data from one or more work tools 18, individual of the work tools in turn being connected to one of the tool controllers. Result data may be data that pertains to operations of work tools 18. In other words, to each tool controller there is connected one or more tools that are to be controlled by the tool controller. The tool communication system further comprises a tools server 10 for configuration management, control of the tool controllers 16, storage of result data received from the tool controllers and/or storage of control data sent to the tool controllers. The tool communication system further comprises a communication node 14 for management and relay of communication, for example between a server 10 and a controller 16. The communication node 14 may comprise a storage 13 associated with it for storing information such as communication logs. Also, there may be clients 12 such as laptops connected to the tools server 10. There may be more than one tools server in a tool communication system, illustrated by the two tools servers in fig. 1.

A work tool 18 may be any kind of power driven tool that is used for performing mechanical operations, such as a wrench, a drill, a hammer. The work tool 18 may be a part of a work station with e.g. material for production, arrangements for material handling etc. The work tool 18 may be set up for simple operations, or just manually controlled by an operator person. However, the work tool may also be set up for complex work operations by a configuration. Such complex work operations may include a number of similar and different operations, series of operations with one equipment, shifting to another equipment followed by another series of operations and may be shifting to a third equipment. How the work tool should perform operations and interact with an operator, may be based on control data received from the tools server. Each individual operation may need to be performed with high accuracy in terms of e.g. torque and rotation speed. Further, in order to maintain desirable quality control, results performed by the work tools may be measured by e.g. sensors, such results may be the number of rotations performed, final torque, location of operation, time, and similar result data for work tool operation.

The tool communication system may be applied e.g. in a small manufacturing plant in a clean environment. The tool communication system may be distributed over several buildings or over remote locations. The manufacturing environment may also be a factory with a challenging environment of dirt, aggressive chemicals, electrical disturbances, sometimes challenging for communication equipment and computers. Sometimes the communication may be interrupted. Even if it is a challenging environment, configuration data and result data need to be conveyed between a tool server and a controller. Production stops or production disturbances need to be avoided, because they sometimes result in significant costs.

Communication in the tool communication system may be performed based on Local Area Network, LAN, technologies such as Ethernet, e.g. according to IEEE 802.3 , Transfer Control Protocol/User Datagram Protocol/Internet Protocol, TCP/UDP/IP, wireless protocols such as Wireless LAN, e.g. according to IEEE 802.11, just to mention a few non-limiting examples. The tool communication system may be operational in a factory or a manufacturing plant, for examples for manufacturing of consumer or industrial goods, including house hold appliances, cars, toys, machines, etc. The tool communication system may be covering or connecting a number of facilities within a closed area such as a campus with a number of buildings. The tool communication system may be covering or connecting a number of factories or manufacturing plants remotely located from each other.

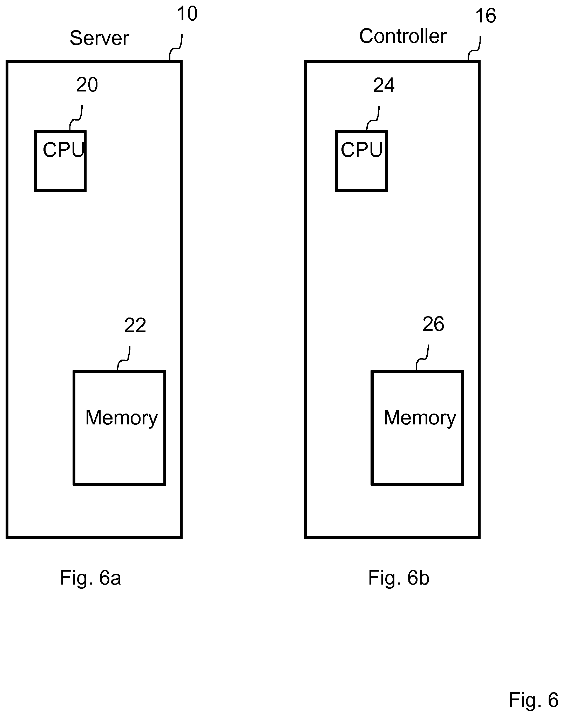

A tool server, such as the tool server 10, may be a server which clients 12 may connect to for creation and/or administration of work operations for work tools 18. The tool server 10 may be a general purpose server or a tool server specifically arranged for remote control of work tools. Administrators connecting to the tool server via clients 12, may for example create, specify and change how a particular work tool 18 or a group of work tools 18 should behave in a certain situation. Examples are series of operations, tool selections, values for each operation like a torque rate, number of rotations, rotational speed, position, how and when result data should be feed backed, etc. The server 10 may comprise a CPU 20 and a memory 22, as shown in Fig. 6a.

A communication node, such as the communication node 14, may be arranged for managing communication between different participating functional nodes or devices in the communications network. The communication node 14 may for example keep track of identities of tool controllers 16, tool servers 10, and/or work tools 18. The communication node 14 may keep track of any nodes or devices alternating between on-line and off-line. A tool controller 16 may for example not always be connected to a network for various reasons. The communication node 14 may further validate and/or authorize node or device communication in the communications network. The communication node 14 may comprise a CPU 24 and a memory 26, as shown in Fig. 6b.

A tool controller 16, such as a first tool controller 16a, may be a tool controller for control of work tools. The tool controller may be a specific node for control of work tools or it may be for example a general purpose computer, which has been adapted for control of work tools. The tool controller may be connected to the tool communication system for communication by wire or wirelessly. The tool controller may receive control data and store the control data in a suitable database from e.g. the tool server 10. The tool controller may use the control data for control of a work tool or operation of a work tool. Sensors of the tool controller or the work tool may generate result data of work tool operations. The tool controller 16 may also be termed controller, controller node, controlling node, control unit, tool processor, tool regulator, or similar terms. The tool controller 16 may be co-located with or comprised in a work tool 18, a tool server 10, a communication node 14, or other suitable technical nodes operating in a tool communication system.

A work tool 18, such as a first work tool 18a, may be controlled by the first tool controller 16a. Controlling a work tool 18a may for example include providing control data to the work tool, operating the work tool by provision of electrical power, pneumatic or hydraulic power, sensor instructions, not limiting to other types of control or regulation. Controlling the work tool may for example also include detection of electrical energy consumption, sensing of pneumatic or hydraulic power, torque, torque rate, position, three dimensional position, or other types of sensor data. Examples of a work tool 18 may be a torque wrench, a hammer, a breaker, a rock drill, a nut runner, a screwdriver, or various combinations of those, not limiting to other similar types of work tools. A work tool 130 may be connected by wire or wirelessly to its tool controller.

A client 12 may be a computer, e.g. a laptop or a stationary computer that is connected wirelessly or via wire line to the tools server. The client may be run by an administrator and used by the administrator to for example control the function of the work tools and/or the tool controllers, by for example supervising sensor data delivered by the tool controllers to the tool server and inputting tool control data that is delivered by the tool server to the concerned tool controller for subsequent delivery to the concerned work tools of that tool controller.

Further, control data that is delivered to a tool controller and stored at the tool controller may also be stored at a database 11 of the tool server 10. Also, other data related to the control and/or operation of the work tools may be stored at the database of the tool server, such as sensor data.

Clients 12 may connect to a desired server 10, which may then enable the client 12 to communicate with other applications, such as a controller 18. A communication node 14 is an entity that is responsible for routing, managing and storing communication, and is adapted to and responsible for authenticating and registering any clients that use an appropriate protocol. The communication node is further arranged to act as a message relay and client registry in a distributed tool system. A system may have one or multiple communication nodes 14. A communication node 14 does not have knowledge or logic of specific client types, it handles everyone similarly. In order for the communication node 14 to distinguish between different entities, an identifier provided by the connected entity will be used to register and subsequently identify the entity with the communication node 14. An entity is a device connected to the communication node and may for example be a server 10 or a controller 16.

Entities connected to the communication node 14 may request a list of registered entities and may also subscribe to certain events in order to receive information when they happen, for instance when a new entity connects or when an old entity disconnects. The communication node 14 keeps track of sessions between the connected entities and de-allocates sessions when an entity stops responding. The communication node 14 also routes messages between entities and makes it possible to subscribe to and monitor messages sent in the system. In one embodiment, messages are structured with a header part comprising the destination and message type, and a payload part comprising control data for controlling a work tool by 18 by a controller 16. The control data may contain both metadata and value data, the metadata pertaining to what is to be performed and the value data containing a value for what is to be performed, e.g. the amount of torque to be used during an operation. There are a number of exemplary specific functions that may be supported by the communication node, listed below:
*Register*: Used to register a new client. After a client 12 has connected to the communication node 14, it must be registered before it is allowed to do anything. A part of this registration process includes authenticating the connecting client to ensure that it is authorized to connect.
*Connect to client*: Used to connect the communication node 14 to a client 12. This function is used when connecting to a client 12 that is not configured to automatically register with the communication node 14, for instance a controller 16. Typically, information about an Internet Protocol and a port is included in the connect message.
*Disconnect client*: Disconnects a client from the communication node by using the corresponding unique ID for the client to be disconnected.
*Subscribe to client status*: Used to subscribe to changes in connection for a client. A filter may be used to subscribes to certain types of clients such as controllers 16.
*Unsubscribe to client status*: Cancels a previous subscription to a client or client type.
*Subscribe to messages*: Subscribes to messages sent in the system. As with clients, a filter may be used to subscribe to certain types of messages or to messages to/from specific clients.
*Unsubscribe to messages*: Cancels a previous subscription to messages or message types.
*List clients*: Used to list all connected clients, a filter may be used to list only certain types of clients.
*Read*/*Write configuration*: The communication node 14 supports messages to read and update information in the communication node 14.

The communication node 14 may also keep track of all communication. This may be done through logs of all messages sent and all clients that connect and/or disconnect. It also keeps track of sessions allocated by a client in another client. Messages relating to allocating a session may have a certain message class, such as *SessionAllocation.* For deallocating a session, a *Sessiondeallocation* message may be used.

The communication node 14 may comprise a communication node manager. A communication node manager may for example be a software program installed on the communication node or it may be an external unit plugged in to the communication node. The communication node manager may be used to:
- Connect to multiple communication nodes
- Display clients connected to a communication node
- Send messages to clients
- Monitor messages sent through a communication node
- Monitor messages sent to and from specific clients or types of clients
- Connect to client, requires the client to be able to connect
- Disconnect client
- View and change configuration of a communication node
- Start/stop/restart service of a communication node

A server, such as the server 10, may be a server to which clients 12 may connect to for creation and/or administration of work operations for work tools 18. The tool server may be a general purpose server or a tool server 10 specific arranged for remote control of work tools. Administrators connecting to the tool server via clients 12, may for example create, specify and change how a particular work tool or a group of work tools 18 should behave in certain situation. Examples are series of operations, tool selections, values for each operation like a torque rate, number of rotations, rotational speed, position, how end when result data should be feed backed, etc.

Servers 10 in the tool system are primarily used as connection points for clients and are intended to provide a user friendly interface for communicating with and configuring controllers 16. This interface may be accessible from the server itself or it may be accessible through a client 12 connected to the server 10. Servers 10 are generally the entity through which communication with a controller is initiated, either by the server 10 or by a client 12 connected to the server. The server 10 has software installed thereon for enabling the above mentioned features. This software may for example be applications intended for communication within a tool environment.

Below is a list of scenarios relevant for a server 10 in the system described herein:
Connect new controller: In this scenario, the server has no previous knowledge of the connecting controller and therefore retrieves all necessary information from the controller. This may be done via a communication node or straight from server to controller. The server 10 then optionally updates relevant clients accordingly.
Connect known controller: In this scenario the server 10 has knowledge of the connecting controller 16 before it connects, for instance when a controller connects after being offline for a while. The first step for the server 10 is then to check for configuration changes in the controller 16. If no change has been made, the server still updates database information to reflect that even though the information is the same, it was received at a later point in time. Also, the server optionally updates relevant clients with the new information.
Connected controller configuration change: In this scenario, the server receives an information notification from a controller that it has been updated. The server 10 then retrieves the updated configuration, and optionally notifies relevant clients.
Entity is added/removed: This occurs when an entity such as a controller connects or disconnects from the server. The server is then notified by the entity and updates its database information accordingly, and optionally notifies relevant clients.
Update configuration in controller: In this scenario a user requests configuration changes for a controller. The server then retrieves any necessary data from its database, and then updates the controller configuration. After this has been done, the server updates its database with the new configuration and optionally notifies relevant clients.
Restore previous configuration: This function may be requested by a client connected to a server. The server then retrieves the older configuration from its database, then sends it to the client which then changes its configuration. The configuration is then saved and information regarding this is sent to the server, which updates its database.

One of the tasks of a server 10 in the tool system described herein is to store data from communication. This data may for example be related to the work performed by a work tool 18, such as the amount of torque applied or the number of revolutions required to tighten a bolt. It may also store other information, for example settings and configurations for a controller 16. This enables for example historical comparisons as well as facilitates configuration of new controllers by using stored data related to similar controllers.

Controllers 16 in the system have the main purpose of controlling work tools 18. Controllers may communicate with servers 10, either via a communication node 14 or directly. The direct communication may be both wireless and require physical connection. It is possible for a user to use a controller 16 to configure a tool 18, for example through a client 12, such as a personal computer, connected to a server 10. It is possible for a controller 16 to be integrated into a tool 18, and it is also possible for a controller 16 to be external from the tool 18.

Examples of parameters that may be controlled via a controller include torque, angle and speed. For example a wrench work tool 18 could be controlled by a controller 16 to determine the angle of operation and the amount of torque applied. It could further be controlled to work according to a pre-determined pattern, for instance rotating three full revolutions and then stopping or tightening to a certain degree. It may also be controlled to make a revolution upon directions from a user, such as when a specific button on a computer acting as a client 14 connected through a server 10 to a controller 16 is pressed. However, these are merely examples of what may be configured and how, there are a vast number of other parameters relating to the tools 18 that may be configured through use of controllers 16.

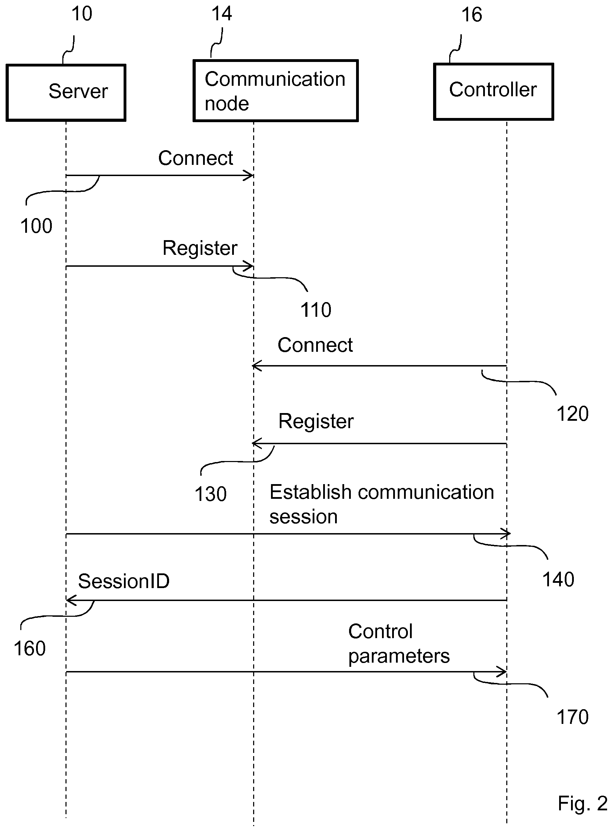

Fig. 2 shows communication involving a server 10, a communication node 14 and a controller 16 that are operatively coupled together. The communication is illustrated as being synchronous, but it may also be asynchronous, meaning that a process does not stop to wait for a specific response but instead continues normal processing when a message has been sent and a callback is called when a response is received.

In the exemplary scenario as shown in Fig. 2, the server 10 first connects 100 to the communication node 14. Before being able to communicate with other entities connected to the communication node, the server 10 registers 110 with the communication node 14, and the communication node 14 may acknowledge that the server 10 is connected. The controller also connects 120 with the communication node 14, and after it has been connected it may also register 130 with the communication node 14 in order to communicate with other entities also connected to the communication node. In some embodiments, it is also possible for the controller 16 to register before the communication node 14, or for the controller 16 and the communication node 14 to register simultaneously. In some embodiments, the step of registering 110 and connecting 120 can be done simultaneously in a single step.

In some embodiments, the communication node 14 may assign an identifier to each entity that is connected to and/or registered with it. The identifiers may for instance be numbers or names and they may be in various different formats, such as numeric, binary and alphanumeric. The identifiers are used for keeping track of the registered units, and in an exemplary embodiment the communication node 14 is the only entity within the communications network 11 that has knowledge of the virtual and/or physical location of other entities. The assigned identifiers are the only type of information that entities other than the communication node, such as the server 10 and the controller 16, need to know in order to effectively direct messages to the appropriate destinations.

The communication node 14 may in some embodiments be further adapted to also assign a unit type to each entity that has registered with it. In some embodiments the unit type only specifies whether the connected entity is a server or a controller, in other embodiments the unit types will be more specified. For example, there may be different types among controllers such as wrench controllers, drill controllers etc. It is also possible for the unit types to be even more specific and/or to be named differently, such as "PF6000" denoting one group of controllers. By assigning a type to each registered entity, it becomes easier for other connected entities to know what kind of other entities are already connected to the communication node, and facilitates locating and communicating with the relevant entities.

After connecting to and registering with the server, it is possible for the server 10 to communicate with the controller 16 via the communication node 14. One exemplary scenario is shown in Fig.2 where the server 10 requests 140 to establish a communication session controller 16. This means, in exemplary implementation, communicating to the communication node 14 that the server 10 wishes to communicate with the controller 16, whereafter the communication node 14 may establish a communication session between the server 10 and the controller 16.

When the server 10 communicates with the controller 16 as described above, the communication node 14 may in some embodiments include the identifier of the source and/or the destination in the communication. For instance when the server 10 requests 140 to establish a communication session by logging in to the controller 16, the communication node will specify which server 10 initiated the communication, and also to which controller 16 the communication is being sent.

After a communication session has been established between the server 10 and the controller 16, it is possible to use the server 10 to control 150 parameters of a work tool 18. These parameters are in an exemplary embodiment related to the operation of the work tool 18 and may for instance be angle, torque and speed. When controlling the work tool 18 via the controller 16 by using the server 10, the communication relating to control of parameters is routed by the communication node 14, since the server 10 and the controller 16, in an exemplary embodiment, does not have information about the others' location or virtual address.

The communication node 14 is further adapted to store all communication sessions in a message log. The message log is typically a database for storing and keeping track of all communication sessions and all registered entities related to the communication node 14. In some embodiments, the message log only registers which entities that have been communicating with one another and not the content of the communication. In other embodiments, the message log is further adapted to store information relating to the sender of a communication, the destination for a communication, as well as the content of the communication.

It is possible for the communication node 14 to also provide a session identifier with communication in order for the server 10 and controller 16 to know what subsequent communication is related to. This session identifier may in some embodiments be a uniquely generated identifier, for instance a number or a name, and in some embodiments it may be a randomly generated and assigned number with a very low probability of generating two identical identifiers. In some embodiments, the communication node 14 also provides a sequence identifier for keeping track of asynchronous communication.

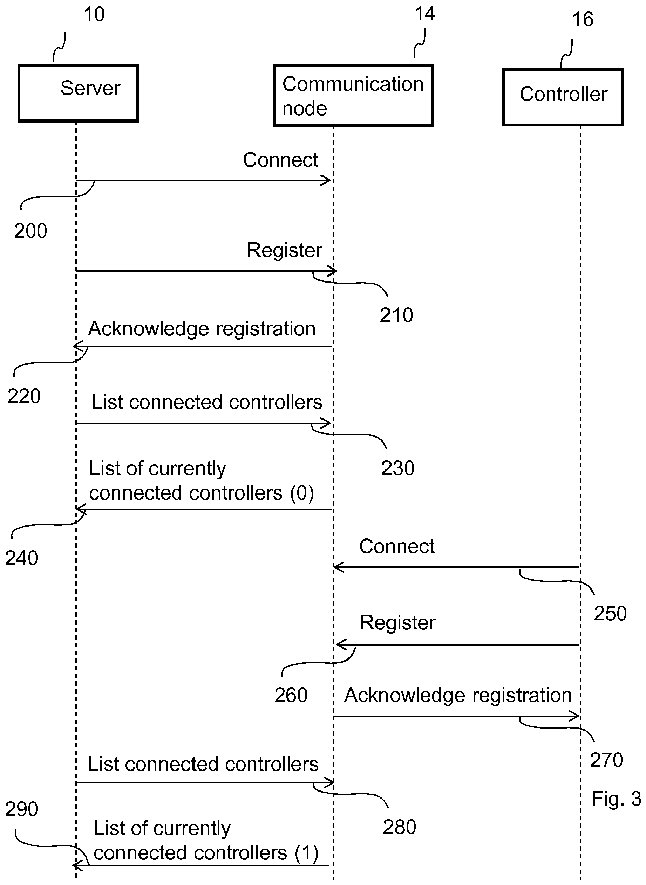

Fig. 3 shows how the communication node 14 may be further adapted to list all connected entities upon request. It an exemplary embodiment it is possible to request a list of connected entities, connected controllers, connected servers, and connected entities of a certain type, but in alternate embodiments there may be more variations available. The figure shows a server first connecting 200 and registering 210 with the communication node 14, whereafter the communication node 14 acknowledges 220 the registration. The step of acknowledging 220 the registration is optional and in some embodiments the communication node does not acknowledge registration, and in other embodiments the step of acknowledging 220 registration may be included in the registration step 210.

After registering, the server 10 may request that the communication node lists all connected entities, all connected controllers, all connected controllers of a certain type, all servers or any similar combination. Fig. 3 shows how the server 10 requests that the communication node 14 lists all connected controllers in step 230. The communication node 14 then responds with a list of connected controllers, which may be 0 as indicated in step 240. If a controller 16 connects 250 and registers 260 with the communication node 14 after the list of controllers has been requested, the list is, in an exemplary embodiment, not automatically updated and communicated to the server 10. However, if the server 10 makes another request 280 to list connected controllers after the controller 16 has connected 250 and registered 260 with the communication node, the communication node 14 will respond 290 with a new list of connected controllers, in the example show in Fig. 3 this would be one controller. By having a function for listing the connected entities, there is no need for the entities connected to the communication node 14 to have knowledge about the version, the location, virtual or physical, or any other information relating to other connected entities.

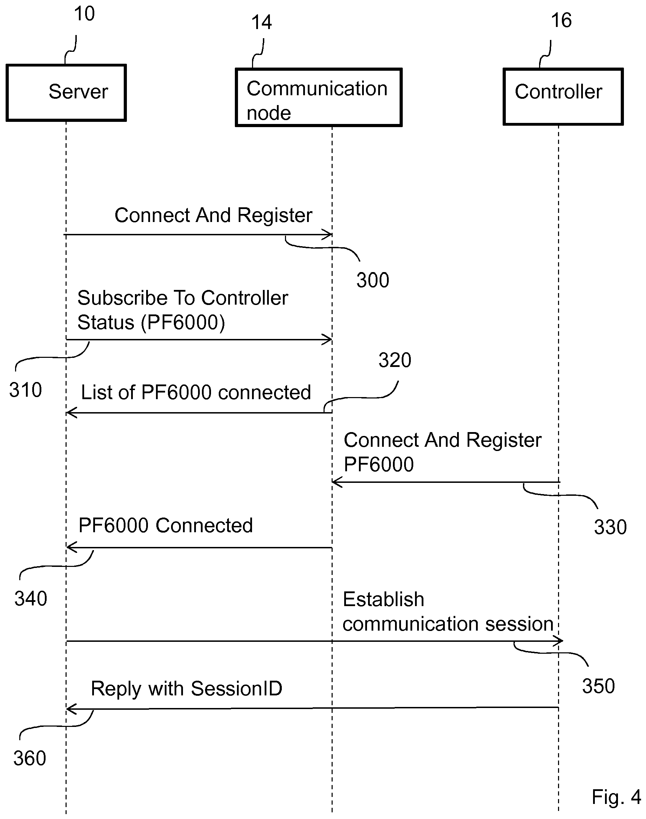

Fig. 4 shows the server connecting to and registering 300 with the communication node 14, in one step. It may be possible to connect and register in separate steps, but it may also be done in a single step. The server 10 may choose to subscribe 310 to the status of a certain controller 16 or a certain controller type. Subscribing means to request to be notified of any update relating to the controller. The status of a controller is in exemplary embodiment related to whether it's connected or not, but it may in other embodiments be more detailed and contain information regarding, for example, how long ago the controller was connected, the entity with which the controller most recently communicated and so on.

After connecting and registering 300 the server, Fig. 4 shows the server requesting to subscribe 310 to the status of all controllers of the type "PF6000". The communication node 14 then responds by listing 320 currently connected controllers of the type specified by the server in the subscription request. In the flow shown in Fig. 4 there are no controllers 16 connected to the communication node 14 at the time of the subscription request, and in such a scenario the response from the communication node 14 would indicate that no controllers of the requested type are connected at that time.

However, if a controller 16 of a certain type connects and registers 330 with the communication node 14 after a server 10 has subscribed to the status of all controllers of that type, the server 10 will still be notified. Fig. 4 shows how a controller 16 connects and registers 300 with the communication node 14. The communication node 14 then notifies 340 to each server 10 that has subscribed to the status of the controller type that matches the recently connected controller 16, that a controller of the specified type has connected to the communication node 14. This scenario is repeated each time a new entity for which a previously registered entity has subscribed to status changes, connected with the communication node 14. By having a subscription function, the need for making repeated requests for the same information is reduced, and the system may also have better and more recently updated information.

The communication node 14 not only keeps track of all the communication between controllers 16 and servers 10, it also keeps track of connected controllers and provides a service for subscription of controller state, such as described above. The server 10 may subscribe for changes in a controller status and keep the controller status in memory, so that it does not continuously have to request the communication node 14 to update the status. This makes it possible for any client 12 connected to a server 10 to ask for the state of a controller 16 without necessarily having to go through the communication node 14.

Fig. 4 further shows how a sever 10 may communicate with a controller 16 via a communication node 14, and how a reply function may be used. A server 10 previously registered with the communication node 14 may subscribe 310 to the status of controllers 16 through a communication sent to the communication node 14. The communication node 14 then responds listing 320 connected controllers 16.

When a new controller 16 connects and registers 320 with the communication node 14, the server 10 will be notified 340 that a new controller has been connected, as long as the server has not unsubscribed to controller status before the controller 16 connects and registers 320. By unsubscribing, a previous subscription may be canceled.

If at least one server 10 and at least one controller 16 is connected to the communication node 14, it is possible for the server 10 to communicate with and control the controller 16 via the communication node 14. In some embodiments, a reply function is a part of how the communication between the server 10 and the controller 16 is performed.. The server 10 may request 350 to establish a communication session with controller 16. The controller 16 may then respond to the request 350 by using a reply function. In an exemplary embodiment, the reply function allows an entity connected to the communication node 14 to reply to a communication without unnecessarily specifying to where the communication should be sent. The reply function automatically sends the communication to the entity from which communication was sent. Fig. 4 shows how the controller 16 replies 360 by providing a session ID to the server 10. The session ID is then included in all continued communication between the server 10 and the controller 16 until the communication session is ended. Fig. 4 shows the communications 350 and 360 as being between server 10 and controller 16 which is the case, although all communication is still routed through the communication node 14

Since all communication between a controller 16 and a server 10 typically is done via the communication node 14, only the communication node 14 needs to know for example the IP addresses of the controllers 16 and the server 10, the entire system needs no knowledge of it. This facilitates configuration of possible firewalls since the system only has one point of access to all controllers 16, namely the communication node 14.

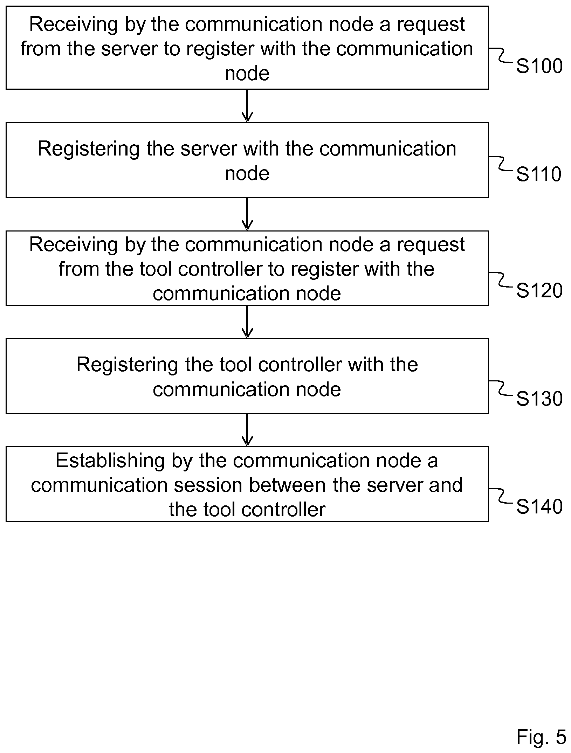

Fig. 5 shows a method performed in a communication node 14 according to one embodiment. The communication node 14 receives S100 a request from a previously connected server 10 to register with the communication node 14, and subsequently registers S110 the server with the communication node 14. The communication node 14 then receives a request from a tool controller 18 to register with the communication node 14, and registers S130 the tool controller 18 with the communication node 14. Then, the communication node 14 may establish S140 a communication session between the server 10 and the tool controller 18.

Fig. 6 shows a more detailed block diagram of a server 10, as shown in Fig. 6a, and a more detailed block diagram of a controller 16, as shown in Fig. 6b. The server 10 may comprise a Computer Processing Unit 20 and a memory 22, used for example to store communication between entities. The controller 16 may similarly comprise a Computer Processing Unit 24 and a memory 26, the memory may be used to store for instance control data relating to operations performed by a work tool 18.

Although the description above contains a plurality of specificities, these should not be construed as limiting the scope of the concept described herein but as merely providing illustrations of some exemplifying embodiments of the described concept. It will be appreciated that the scope of the presently described concept is only limited by the attached claims. Reference to an element in the singular is not intended to mean "one and only one" unless explicitly so stated, but rather "one or more". Moreover, it is not necessary for an apparatus or method to address each and every problem sought to be solved by the presently described concept, for it to be encompassed hereby.

## Claims

1. A system in a work tool communications network (11), comprising:
a server (10) comprising a memory and operatively coupled to a communication node, the server (10) being adapted to connect to and register with the communication node;
the communication node (14) comprising a processor and a memory device and being operatively coupled to a controller (16);
the controller (16) comprising a processor and a memory and being adapted to control parameters of a work tool (18), and to connect to and register with the communication node (14);
the communication node (14) being adapted to establish a communication session between the server (10) and the registered controller (16) controlling the work tool (18);
wherein the communication node is further adapted to assign a session identifier to the session, wherein the communication node is further adapted to assign an identifier to the server and the controller registered with the communication node, and further wherein the communication node is adapted to assign a type to the registered server and controller.

2. System according to claim 1, wherein the communication node is further adapted to list all connected entities.

3. System according to any of claims 1 to 2, wherein the communication node further comprises a database and is further adapted to track and store all communication sessions in the database.

4. System according to any of claims 1 to 3 wherein a destination identifier and a source identifier are included in each communication session.

5. System according to any of claims 1 to 4 wherein the communication node is further adapted to keep a record of all servers and controllers that have been registered and further adapted to request a previously registered server or controller to connect to the communication node.

6. System according to any of claims 1 to 5 wherein the communication node is further adapted to allow registered servers and controllers to subscribe to the status of other registered servers and controllers or types of servers and controllers.

7. System according to any of claims 1 to 6 wherein the communication node is further adapted to have reply function for allowing registered servers and controllers to reply to communication in communication sessions.

8. System according to any of claims 1 to 7 wherein the server is further adapted to control parameters of the work tool till via the controller.

9. A method for communication in a work tool communications network (11) comprising a server (10), a communication node (14), a plurality of tool controllers (16) and a plurality of work tools (18) connected to the tool controllers (16), wherein the server (12) and the tool controllers (16) are connected to the communication node (14), comprising:
registering (110) the server (12) with the communication node (14);
registering (130) the tool controller (16) with the communication node (14);
establishing (140) a communication session between the server (12) and each of the plurality of the tool controllers (16);
wherein the method comprises assigning a session identifier to each communication session, wherein the method further comprises assigning an identifier to each server and each controller registered with the communication node, and further wherein the method comprises assigning a type to each registered server and controller.

10. Method according to claim 9 further comprising listing all connected entities.

11. Method according to any of claims 9 to 10 further comprising tracking all communication sessions and storing them in a database in the communication node.

12. Method according to any of claims 9 to 11 further comprising including a destination identifier and a source identifier in each communication session.

13. Method according to any of claims 9 to 12 wherein the communication node is further adapted to keep a record of all servers and controllers that have been registered and further adapted to request a previously registered server or controller to connect to the communication node.

14. Method according to any of claims 9 to 13 wherein the communication node is further adapted to allow registered servers and controllers to subscribe to the status of other registered servers and controllers or types of servers and controllers.

15. Method according to any of claims 9 to 14 further comprising having a reply function for replying to communication in communication sessions.

16. Method according to any of claims 9 to 15 further comprising controlling, by the server, parameters of the work tool via the controller.

17. A communication node (14) for use in a work tool communications network (11) comprising a server (10), a plurality of tool controllers (16) and a plurality of work tools (18) connected to the tool controllers (16), wherein the communication node (14) is configured to:
connect to the server (10);
connect to the tool controller (16);
register the server (10) and the tool controller (10) with the communication node;
establish a communication session between the server (10) and the tool controller (16);
wherein the communication node (14) is configured to assign the session a session identifier, wherein the communication node is further configured to assign an identifier to the server and the controller registered with the communication node, and further wherein the communication node is configured to assign a type to the registered server and controller.

18. Communication node according to claim 17 further configured to list all connected entities.

19. Communication node according to any of claims 17 to 18 further comprising a database and further configured to track and store all communication sessions in the database.

20. Communication node according to any of claims 17 to 19 wherein a destination identifier and a source identifier are included in each communication session.

21. Communication node according to any of claims 17 to 20 further configured to keep a record of all servers and controllers that have been registered and to request a previously registered server or controller to connect to the communication node.

22. Communication node according to any of claims 17 to 21 further configured to allow registered servers and controllers to subscribe to the status of other registered servers and controllers or types of servers and controllers.

23. Communication node according to any of claims 17 to 22 further configured to have a reply function for allowing registered servers and controllers to reply to communication in communication sessions.

24. Communication node according to any of claims 17 to 23 further adapted to allow the server to control parameters of the work tool till via the controller (in a communication session).

25. A computer program product comprising a non-transitory computer readable medium storing computer instructions for managing communication in a communication node of a work communications network (11), the network comprising a server (10), a communication node (14) comprising a memory device; and
a processing device operatively coupled to the memory device, wherein the processing device is configured to execute computer-readable computer instructions;
a plurality of tool controllers (16) and a plurality of work tools (18) connected to the tool controllers (16), wherein the server (12) and the tool controllers (16) are connected to the communication node (14), the computer instructions comprising:
instructions for:
connecting (100) and registering (110) the server (10) to the communication node (14);
connecting (120) and registering (130) the tool controllers (16) to the communication node (14);
establishing (140) a communication session between the server (10) and each tool controller (16);
wherein the computer instructions comprises instructions for assigning a session identifier to each session, wherein the computer instructions further comprises instructions for assigning an identifier to the server and each controller registered with the communication node, and further wherein the computer instructions comprises instructions for assigning a type to the registered server and controller.

26. Computer program product according to claim 25, wherein the computer instructions further comprises instructions for listing all connected entities.

27. Computer program product according to any of claims 25 to 26, wherein the computer instructions further comprises instructions for tracking all communication sessions and storing them in a database in the communication node.

28. Computer program product according to any of claims 25 to 27, wherein the computer instructions further comprises instructions for including a destination identifier and a source identifier in each communication session.

29. Computer program product according to any of claims 25 to 28, wherein the computer instructions further comprises instructions for keeping a record of all servers and controllers that have been registered and for requesting a previously registered server or controller to connect to the communication node.

30. Computer program product according to any of claims 25 to 29, wherein the computer instructions further comprises instructions for allowing registered servers and controllers to subscribe to the status of other registered servers and controllers or types of servers and controllers.

31. Computer program product according to any of claims 25 to 30, wherein the computer instructions further comprises instructions for a reply function for replying to communication in communication sessions.

32. Computer program product according to any of claims 25 to 31, wherein the computer instructions further comprises instructions for controlling, by the server, parameters of the work tool via the controller.

33. Method for communication in a work tool communications network (11) comprising a server (10), a communication node (14), a plurality of tool controllers (16) and a plurality of work tools (18) connected to the tool controllers (16), wherein the server (12) and the tool controllers (16) are connected to the communication node (14), comprising:
receiving (S100), by the communication node, a request from the server to register with the communication node;
registering (S110) the server with the communication node;
receiving (S120), by the communication node, a request from the tool controllers to register with the communication node;
registering (S130) the tool controller with the communication node;
establishing (S140), by the communication node, a communication session between the server and each tool controller;
wherein the method comprises assigning, by the communication node, a session identifier to each communication session, wherein the method further comprises assigning, by the communication node, an identifier to the server and to each controller registered with the communication node, and further wherein the method comprises assigning, by the communication node, a type to each registered server and controller.

34. Method according to claim 33 further comprising listing, by the communication node, all connected entities.

35. Method according to any of claims 33 to 34 further comprising tracking, by the communication node, all communication sessions and storing them in a database in the communication node.

36. Method according to any of claims 33 to 35 further comprising including, by the communication node, a destination identifier and a source identifier in each communication session.

37. Method according to any of claims 33 to 36 wherein the communication node is further adapted to keep a record of all servers and controllers that have been registered and further adapted to request a previously registered server or controller to connect to the communication node.

38. Method according to any of claims 33 to 37 wherein the communication node is further adapted to allow registered servers and controllers to subscribe to the status of other registered servers and controllers or types of servers and controllers.

39. Method according to any of claims 33 to 38 further comprising having a reply function for replying to communication in communication sessions.

40. Method according to any of claims 33 to 39 further comprising controlling, by the server via the communication node, parameters of the work tool via the controller.

## Patentansprüche

1. System in einem Werkzeugkommunikationsnetzwerk (11), umfassend:
einen Server (10), der einen Speicher umfasst und betriebsmäßig mit einem Kommunikationsknoten verbunden ist, wobei der Server (10) eingerichtet ist, sich mit dem Kommunikationsknoten zu verbinden und sich bei demselben zu registrieren;
wobei der Kommunikationsknoten (14) einen Prozessor und eine Speichervorrichtung umfasst und betriebsmäßig mit einer Steuerung (16) verbunden ist;
wobei die Steuerung (16) einen Prozessor und einen Speicher umfasst und eingerichtet ist, Parameter eines Arbeitswerkzeugs (18) zu steuern und sich mit dem Kommunikationsknoten (14) zu verbinden, und sich bei diesem zu registrieren;
der Kommunikationsknoten (14) eingerichtet ist, eine Kommunikationssitzung zwischen dem Server (10) und der registrierten Steuerung (16) einzurichten, die das Arbeitswerkzeug (18) steuert;
wobei der Kommunikationsknoten ferner eingerichtet ist, der Sitzung eine Sitzungskennung zuzuweisen, wobei der Kommunikationsknoten ferner eingerichtet ist, dem Server und der Steuerung, die bei dem Kommunikationsknoten registriert ist, eine Kennung zuzuweisen, und wobei ferner der Kommunikationsknoten eingerichtet ist, dem registrierten Server und der Steuerung einen Typ zuzuweisen.

2. System nach Anspruch 1, wobei der Kommunikationsknoten ferner eingerichtet ist, alle verbundenen Einheiten aufzulisten.

3. System nach einem der Ansprüche 1 bis 2, wobei der Kommunikationsknoten ferner eine Datenbank umfasst und ferner eingerichtet ist, alle Kommunikationssitzungen in der Datenbank zu verfolgen und zu speichern.

4. System nach einem der Ansprüche 1 bis 3, wobei eine Zielkennung und eine Quellkennung in jeder Kommunikationssitzung enthalten sind.

5. System nach einem der Ansprüche 1 bis 4, wobei der Kommunikationsknoten ferner eingerichtet ist, eine Aufzeichnung aller Server und Steuerungen aufrechtzuerhalten, die registriert wurden und ferner eingerichtet sind, einen zuvor registrierten Server oder eine Steuerung aufzufordern, sich mit dem Kommunikationsknoten zu verbinden.

6. System nach einem der Ansprüche 1 bis 5, wobei der Kommunikationsknoten ferner eingerichtet ist, registrierten Servern und Steuerungen zu erlauben, den Status anderer registrierter Server und Steuerungen oder Typen von Servern und Steuerungen zu abonnieren.

7. System nach einem der Ansprüche 1 bis 6, wobei der Kommunikationsknoten ferner eingerichtet ist, eine Antwortfunktion aufzuweisen, um registrierten Servern und Steuerungen zu erlauben, auf Kommunikation in Kommunikationssitzungen zu antworten.

8. System nach einem der Ansprüche 1 bis 7, bei dem der Server ferner dafür ausgerichtet ist, Parameter des Arbeitswerkzeugs bis über die Steuerung zu steuern.

9. Verfahren zur Kommunikation in einem Arbeitswerkzeugkommunikationsnetzwerk (11) mit einem Server (10), einem Kommunikationsknoten (14), einer Vielzahl von Werkzeugsteuerungen (16) und einer Vielzahl von Arbeitswerkzeugen (18), die mit den Werkzeugsteuerungen verbunden sind (16), wobei der Server (12) und die Werkzeugsteuerungen (16) mit dem Kommunikationsknoten (14) verbunden sind, umfassend:
Registrieren (110) des Servers (12) bei dem Kommunikationsknoten (14) ;
Registrieren (130) der Werkzeugsteuerung (16) bei dem Kommunikationsknoten (14);
Einrichten (140) einer Kommunikationssitzung zwischen dem Server (12) und jeder der Vielzahl der Werkzeugsteuerungen (16);
wobei das Verfahren das Zuweisen einer Sitzungskennung zu jeder Kommunikationssitzung umfasst, wobei das Verfahren ferner das Zuweisen einer Kennung zu jedem Server und jeder bei dem Kommunikationsknoten registrierten Steuerung umfasst, und wobei das Verfahren ferner das Zuweisen eines Typs zu jedem registrierten Server und jeder Steuerung umfasst.

10. Verfahren nach Anspruch 9, ferner umfassend das Auflisten aller verbundenen Einheiten.

11. Verfahren nach einem der Ansprüche 9 bis 10, ferner umfassend das Verfolgen aller Kommunikationssitzungen und das Speichern dieser in einer Datenbank in dem Kommunikationsknoten.

12. Verfahren nach einem der Ansprüche 9 bis 11, beinhaltend eine Zielkennung und eine Quellkennung in jeder Kommunikationssitzung.

13. Verfahren nach einem der Ansprüche 9 bis 12, wobei der Kommunikationsknoten ferner eingerichtet ist, eine Aufzeichnung aller Server und Steuerungen aufrechtzuerhalten, die registriert wurden und ferner eingerichtet sind, einen zuvor registrierten Server oder eine Steuerung aufzufordern, sich mit dem Kommunikationsknoten zu verbinden.

14. System nach einem der Ansprüche 9 bis 13, wobei der Kommunikationsknoten ferner eingerichtet ist, registrierten Servern und Steuerungen zu erlauben, den Status anderer registrierter Server und Steuerungen oder Typen von Servern und Steuerungen zu abonnieren.

15. Verfahren nach einem der Ansprüche 9 bis 14, ferner umfassend, dass es eine Antwortfunktion zum Antworten auf die Kommunikation in Kommunikationssitzungen aufweist.

16. Verfahren nach einem der Ansprüche 9 bis 15, ferner umfassend das Steuern von Parametern des Arbeitswerkzeugs über die Steuerung durch den Server.

17. Kommunikationsknoten (14) zur Verwendung in einem Arbeitswerkzeugkommunikationsnetzwerk (11) mit einem Server (10), einer Vielzahl von Werkzeugsteuerungen (16) und einer Vielzahl von Arbeitswerkzeugen (18), die mit den Werkzeugsteuerungen verbunden sind (16), wobei der Kommunikationsknoten (14) konfiguriert ist zum:
Verbinden mit dem Server (10);
Verbinden mit der Werkzeugsteuerung (16);
Registrieren des Servers (10) und der Werkzeugsteuerung (10) bei dem Kommunikationsknoten;
Einrichten einer Kommunikationssitzung zwischen dem Server (10) und der Werkzeugsteuerung (16);
wobei der Kommunikationsknoten (14) eingerichtet ist, der Sitzung eine Sitzungskennung zuzuweisen, wobei der Kommunikationsknoten ferner eingerichtet ist, dem Server und der Steuerung, die bei dem Kommunikationsknoten registriert ist, einer Kennung zuzuweisen, und wobei ferner der Kommunikationsknoten eingerichtet ist, dem registrierten Server und der Steuerung einen Typ zuzuweisen.

18. Kommunikationsknoten nach Anspruch 17, der ferner konfiguriert ist, alle verbundenen Einheiten aufzulisten.

19. Kommunikationsknoten nach einem der Ansprüche 17 bis 18, ferner umfassend eine Datenbank und ferner konfiguriert, alle Kommunikationssitzungen in der Datenbank zu verfolgen und zu speichern.

20. Kommunikationsknoten nach einem der Ansprüche 17 bis 19, wobei eine Zielkennung und eine Quellkennung in jeder Kommunikationssitzung enthalten sind.

21. Kommunikationsknoten nach einem der Ansprüche 17 bis 20, ferner konfiguriert, eine Aufzeichnung aller Server und Steuerungen aufrechtzuerhalten, die registriert wurden, und einen zuvor registrierten Server oder eine Steuerung aufzufordern, sich mit dem Kommunikationsknoten zu verbinden.

22. Kommunikationsknoten nach einem der Ansprüche 17 bis 21, ferner konfiguriert, registrierten Servern und Steuerungen zu erlauben, den Status anderer registrierter Server und Steuerungen oder Typen von Servern und Steuerungen zu abonnieren.

23. Kommunikationsknoten nach einem der Ansprüche 17 bis 22, wobei der Kommunikationsknoten ferner konfiguriert ist, eine Antwortfunktion aufzuweisen, um registrierten Servern und Steuerungen zu erlauben, auf Kommunikation in Kommunikationssitzungen zu antworten.

24. Kommunikationsknoten nach einem der Ansprüche 17 bis 23, ferner eingerichtet, dem Server das Steuern von Parametern des Arbeitswerkzeugs bis über die Steuerung (in einer Kommunikationssitzung) zu erlauben.

25. Computerprogrammprodukt, das ein nicht flüchtiges computerlesbares Medium umfasst, das Computeranweisungen für die Verwaltung von Kommunikation in einem Kommunikationsknoten eines Arbeitskommunikationsnetzwerks (11) speichert, wobei das Netzwerk einen Server (10), einen Kommunikationsknoten (14) umfasst, der ein Speichergerät umfasst; und
ein Verarbeitungsgerät, das betriebsmäßig mit dem Speichergerät verbunden ist, wobei das Verarbeitungsgerät konfiguriert ist, computerlesbare Computeranweisungen auszuführen;
eine Vielzahl von Werkzeugsteuerungen (16) und eine Vielzahl von Arbeitswerkzeugen (18), die mit den Werkzeugsteuerungen (16) verbunden sind, wobei der Server (12) und die Werkzeugsteuerungen (16) mit dem Kommunikationsknoten (14) verbunden sind, wobei die Computeranweisungen umfassen:
Anweisungen zum:
Verbinden (100) mit, und Registrieren (110) des Servers (10) bei dem Kommunikationsknoten (14);
Verbinden (120) mit, und Registrieren (130) der Werkzeugsteuerungen (16) bei dem Kommunikationsknoten (14); Einrichten (140) einer Kommunikationssitzung zwischen dem Server (10) und jeder Werkzeugsteuerung (16);
wobei die Computeranweisungen Anweisungen zum Zuweisen einer Sitzungskennung zu jeder Sitzung umfasst, wobei die Computeranweisungen ferner Anweisungen zum Zuweisen einer Kennung zu dem Server und jeder bei dem Kommunikationsknoten registrierten Steuerung umfassen, und wobei die Computeranweisungen ferner Anweisungen zum Zuweisen eines Typs zu jedem registrierten Server und jeder Steuerung umfassen.

26. Computerprogrammprodukt nach Anspruch 25, wobei die Computeranweisungen ferner Anweisungen für das Auflisten aller verbundenen Einheiten umfassen.

27. Computerprogrammprodukt nach einem der Ansprüche 25 bis 26, wobei die Computeranweisungen ferner Anweisungen zum Verfolgen aller Kommunikationssitzungen und das Speichern dieser in einer Datenbank in dem Kommunikationsknoten umfassen.

28. Computerprogrammprodukt nach einem der Ansprüche 25 bis 27, wobei die Computeranweisungen ferner Anweisungen zum Integrieren einer Zielkennung und einer Quellkennung in jeder Kommunikationssitzung beinhalten.

29. Computerprogrammprodukt nach einem der Ansprüche 25 bis 28, wobei die Computeranweisungen ferner Anweisungen zum Aufrechterhalten einer Aufzeichnung aller Server und Steuerungen umfassen, die registriert wurden, und um einen zuvor registrierten Server oder eine Steuerung aufzufordern, sich mit dem Kommunikationsknoten zu verbinden.

30. Computerprogrammprodukt nach einem der Ansprüche 25 bis 29, wobei der Kommunikationsknoten ferner Anweisungen umfasst, um registrierten Servern und Steuerungen zu erlauben, den Status anderer registrierter Server und Steuerungen oder Typen von Servern und Steuerungen zu abonnieren.

31. Computerprogrammprodukt nach einem der Ansprüche 25 bis 30, wobei die Computeranweisungen ferner Anweisungen für eine Antwortfunktion zum Antworten auf die Kommunikation in Kommunikationssitzungen umfassen.

32. Computerprogrammprodukt nach einem der Ansprüche 25 bis 31, wobei die Computeranweisungen ferner Anweisungen zum Steuern von Parametern des Arbeitswerkzeugs über die Steuerung durch den Server umfassen.

33. Verfahren zur Kommunikation in einem Arbeitswerkzeugkommunikationsnetzwerk (11) mit einem Server (10), einem Kommunikationsknoten (14), einer Vielzahl von Werkzeugsteuerungen (16) und einer Vielzahl von Arbeitswerkzeugen (18), die mit den Werkzeugsteuerungen verbunden sind (16), wobei der Server (12) und die Werkzeugsteuerungen (16) mit dem Kommunikationsknoten (14) verbunden sind, umfassend:
Empfangen (S100) einer Anforderung von dem Server durch den Kommunikationsknoten, sich bei dem Kommunikationsknoten zu registrieren;
Registrieren (S110) des Servers bei dem Kommunikationsknoten;
Empfangen (S120) einer Anforderung von den Werkzeugsteuerungen durch den Kommunikationsknoten, sich bei dem Kommunikationsknoten zu registrieren;
Registrieren (S130) der Werkzeugsteuerung bei dem Kommunikationsknoten;
Einrichten (S140) einer Kommunikationssitzung zwischen dem Server und jeder Werkzeugsteuerung durch den Kommunikationsknoten;
wobei das Verfahren das Zuweisen einer Sitzungskennung zu jeder Kommunikationssitzung durch den Kommunikationsknoten umfasst, wobei das Verfahren ferner das Zuweisen einer Kennung zu dem Server und jeder bei dem Kommunikationsknoten registrierten Steuerung durch den Kommunikationsknoten umfasst, und wobei das Verfahren ferner das Zuweisen eines Typs zu jedem registrierten Server und jeder Steuerung durch den Kommunikationsknoten umfasst.

34. Verfahren nach Anspruch 33, ferner umfassend das Auflisten aller verbundenen Einheiten durch den Kommunikationsknoten.

35. Verfahren nach einem der Ansprüche 33 bis 34, ferner umfassend das Verfolgen aller Kommunikationssitzungen durch den Kommunikationsknoten und das Speichern dieser in einer Datenbank in dem Kommunikationsknoten.

36. Verfahren nach einem der Ansprüche 33 bis 35, ferner umfassend das Integrieren einer Zielkennung und einer Quellkennung in jeder Kommunikationssitzung durch den Kommunikationsknoten.

37. Verfahren nach einem der Ansprüche 33 bis 36, wobei der Kommunikationsknoten ferner eingerichtet ist, eine Aufzeichnung aller Server und Steuerungen aufrechtzuerhalten, die registriert wurden und ferner eingerichtet sind, einen zuvor registrierten Server oder eine Steuerung aufzufordern, sich mit dem Kommunikationsknoten zu verbinden.

38. System nach einem der Ansprüche 33 bis 37, wobei der Kommunikationsknoten ferner eingerichtet ist, registrierten Servern und Steuerungen zu erlauben, den Status anderer registrierter Server und Steuerungen oder Typen von Servern und Steuerungen zu abonnieren.

39. Verfahren nach einem der Ansprüche 33 bis 38, ferner umfassend, dass es eine Antwortfunktion zum Antworten auf die Kommunikation in Kommunikationssitzungen aufweist.

40. Verfahren nach einem der Ansprüche 33 bis 39, ferner umfassend das Steuern von Parametern des Arbeitswerkzeugs über die Steuerung durch den Server über den Kommunikationsknoten.

## Revendications

1. Système dans un réseau de communications d'outils de travail (11), comprenant :
un serveur (10) comprenant une mémoire et couplé fonctionnellement à un noeud de communication, le serveur (10) étant adapté pour se connecter au noeud de communication et s'enregistrer auprès de lui ;
le noeud de communication (14) comprenant un processeur et un dispositif de mémoire et étant couplé fonctionnellement à un contrôleur (16) ;
le contrôleur (16) comprenant un processeur et une mémoire et étant adapté pour contrôler les paramètres d'un outil de travail (18), et pour se connecter au noeud de communication (14) et s'enregistrer auprès de lui ;
le noeud de communication (14) étant adapté pour établir une session de communication entre le serveur (10) et le contrôleur (16) enregistré contrôlant l'outil de travail (18) ;
où le noeud de communication est adapté en outre pour attribuer un identificateur de session à la session, où le noeud de communication est adapté en outre pour attribuer un identificateur au serveur et au contrôleur enregistrés auprès du noeud de communication, et où en outre le noeud de communication est adapté pour attribuer un type au serveur et au contrôleur enregistrés.

2. Système selon la revendication 1, dans lequel le noeud de communication est adapté en outre pour énumérer toutes les entités connectées.

3. Système selon l'une quelconque des revendications 1 à 2, dans lequel le noeud de communication comprend en outre une base de données et est adapté en outre pour suivre et stocker toutes les sessions de communication dans la base de données.

4. Système selon l'une quelconque des revendications 1 à 3, dans lequel un identificateur de destination et un identificateur de source sont inclus dans chaque session de communication.

5. Système selon l'une quelconque des revendications 1 à 4, dans lequel le noeud de communication est adapté en outre pour tenir un registre de tous les serveurs et contrôleurs qui ont été enregistrés et adapté en outre pour demander à un serveur ou contrôleur enregistré antérieurement de se connecter au noeud de communication.

6. Système selon l'une quelconque des revendications 1 à 5, dans lequel le noeud de communication est adapté en outre pour permettre aux serveurs et contrôleurs enregistrés de souscrire à l'état d'autres serveurs et contrôleurs ou types de serveurs et contrôleurs enregistrés.

7. Système selon l'une quelconque des revendications 1 à 6, dans lequel le noeud de communication est adapté en outre pour avoir une fonction de réponse pour permettre à des serveurs et contrôleurs enregistrés de répondre à des communications dans des sessions de communication.

8. Système selon l'une quelconque des revendications 1 à 7, dans lequel le serveur est adapté en outre pour contrôler les paramètres de l'outil de travail par le biais du contrôleur.

9. Procédé pour la communication dans un réseau de communications d'outils de travail (11) comprenant un serveur (10), un noeud de communication (14), une pluralité de contrôleurs d'outils (16) et une pluralité d'outils de travail (18) connectés aux contrôleurs d'outils (16), dans lequel le serveur (12) et les contrôleurs d'outils (16) sont connectés au noeud de communication (14), comprenant :
l'enregistrement (110) du serveur (12) auprès du noeud de communication (14) ;
l'enregistrement (130) du contrôleur d'outils (16) auprès du noeud de communication (14) ;
l'établissement (140) d'une session de communication entre le serveur (12) et chacun de la pluralité de contrôleurs d'outils (16) ;
où le procédé comprend l'attribution d'un identificateur de session à chaque session de communication, où le procédé comprend en outre l'attribution d'un identificateur à chaque serveur et à chaque contrôleur enregistré auprès du noeud de communication, et où en outre le procédé comprend l'attribution d'un type à chaque serveur et contrôleur enregistré.

10. Procédé selon la revendication 9, comprenant, en outre, l'énumération de toutes les entités connectées.

11. Procédé selon l'une quelconque des revendications 9 à 10, comprenant, en outre, le suivi de toutes les sessions de communication et leur stockage dans une base de données dans le noeud de communication.

12. Procédé selon l'une quelconque des revendications 9 à 11, comprenant, en outre, l'inclusion d'un identificateur de destination et d'un identificateur de source dans chaque session de communication.

13. Procédé selon l'une quelconque des revendications 9 à 12, dans lequel le noeud de communication est adapté en outre pour tenir un registre de tous les serveurs et contrôleurs qui ont été enregistrés et adapté en outre pour demander à un serveur ou contrôleur enregistré antérieurement de se connecter au noeud de communication.

14. Procédé selon l'une quelconque des revendications 9 à 13, dans lequel le noeud de communication est adapté en outre pour permettre aux serveurs et contrôleurs enregistrés de souscrire à l'état d'autres serveurs et contrôleurs ou types de serveurs et contrôleurs enregistrés.

15. Procédé selon l'une quelconque des revendications 9 à 14, comprenant, en outre, une fonction de réponse pour la réponse à des communications dans les sessions de communication.

16. Procédé selon l'une quelconque des revendications 9 à 15, comprenant, en outre, le contrôle, par le serveur, des paramètres de l'outil de travail par le biais du contrôleur.

17. Noeud de communication (14) pour l'utilisation dans un réseau de communications d'outils de travail (11) comprenant un serveur (10), une pluralité de contrôleurs d'outils (16) et une pluralité d'outils de travail (18) connectés aux contrôleurs d'outils (16), où le noeud de communication (14) est configuré pour :
se connecter au serveur (10) ;
se connecter au contrôleur d'outils (16) ;
enregistrer le serveur (10) et le contrôleur d'outils (10) auprès du noeud de communication ;
établir une session de communication entre le serveur (10) et le contrôleur d'outils (16) ;
où le noeud de communication (14) est configuré pour attribuer à la session un identificateur de session, où le noeud de communication est configuré en outre pour attribuer un identificateur au serveur et au contrôleur enregistrés auprès du noeud de communication, et où en outre le noeud de communication est configuré pour attribuer un type au serveur et contrôleur enregistrés.

18. Noeud de communication selon la revendication 17, configuré, en outre, pour énumérer toutes les entités connectées.

19. Noeud de communication selon l'une quelconque des revendications 17 à 18, comprenant, en outre, une base de données et configuré en outre pour suivre et stocker toutes les sessions de communication dans la base de données.

20. Noeud de communication selon l'une quelconque des revendications 17 à 19, dans lequel un identificateur de destination et un identificateur de source sont inclus dans chaque session de communication.

21. Noeud de communication selon l'une quelconque des revendications 17 à 20, configuré en outre pour tenir un registre de tous les serveurs et contrôleurs qui ont été enregistrés et pour demander à un serveur ou contrôleur enregistré antérieurement de se connecter au noeud de communication.

22. Noeud de communication selon l'une quelconque des revendications 17 à 21, configuré en outre pour permettre aux serveurs et contrôleurs enregistrés de souscrire à l'état d'autres serveurs et contrôleurs ou types de serveurs et contrôleurs enregistrés.

23. Noeud de communication selon l'une quelconque des revendications 17 à 22, configuré en outre pour avoir une fonction de réponse pour permettre à des serveurs et contrôleurs enregistrés de répondre à des communications dans des sessions de communication.

24. Noeud de communication selon l'une quelconque des revendications 17 à 23, adapté en outre pour permettre au serveur de contrôler les paramètres de l'outil de travail par le biais du contrôleur (dans une session de communication).

25. Produit logiciel comprenant un support non-transitoire lisible par ordinateur stockant des instructions informatiques pour la gestion de communications dans un noeud de communication d'un réseau de communication de travail (11), le réseau comprenant un serveur (10), un noeud de communication (14) comprenant un dispositif de mémoire ; et
un dispositif de traitement couplé fonctionnellement au dispositif de mémoire, où le dispositif de traitement est configuré pour exécuter les instructions informatiques lisibles par ordinateur ;
une pluralité de contrôleurs d'outils (16) et une pluralité d'outils de travail (18) connectés aux contrôleurs d'outils (16), où le serveur (12) et les contrôleurs d'outils (16) sont connectés au noeud de communication (14), comprenant :
des instructions pour :
la connexion (100) et l'enregistrement (110) du serveur (10) au noeud de communication (14) ;
la connexion (120) et l'enregistrement (130) es contrôleurs d'outils (16) au noeud de communication (14) ;
l'établissement (140) d'une session de communication entre le serveur (10) et chaque contrôleur d'outils (16) ;
où les instructions informatiques comprennent des instructions pour l'attribution d'un identificateur de session à chaque session, où les instructions informatiques comprennent en outre des instructions pour l'attribution d'un identificateur au serveur et à chaque contrôleur enregistré auprès du noeud de communication, et où en outre les instructions informatiques comprennent des instructions pour l'attribution d'un type à chaque serveur et contrôleur enregistré.

26. Produit logiciel selon la revendication 25, dans lequel les instructions informatiques comprennent, en outre, des instructions pour l'énumération de toutes les entités connectées.

27. Produit logiciel selon l'une quelconque des revendications 25 à 26, dans lequel les instructions informatiques comprennent, en outre, des instructions pour le suivi de toutes les sessions de communication et leur stockage dans une base de données dans le noeud de communication.

28. Produit logiciel selon l'une quelconque des revendications 25 à 27, dans lequel les instructions informatiques comprennent, en outre, des instructions pour l'inclusion d'un identificateur de destination et d'un identificateur de source dans chaque session de communication.

29. Produit logiciel selon l'une quelconque des revendications 25 à 28, dans lequel les instructions informatiques comprennent, en outre, des instructions pour la tenue d'un registre de tous les serveurs et contrôleurs qui ont été enregistrés et pour la demande à un serveur ou contrôleur enregistré antérieurement de se connecter au noeud de communication.

30. Produit logiciel selon l'une quelconque des revendications 25 à 29, dans lequel les instructions informatiques comprennent, en outre, des instructions pour permettre à des serveurs et contrôleurs enregistrés de souscrire à l'état d'autres serveurs et contrôleurs ou types de serveurs et contrôleurs enregistrés.

31. Produit logiciel selon l'une quelconque des revendications 25 à 30, dans lequel les instructions informatiques comprennent, en outre, des instructions pour une fonction de réponse pour répondre à des communications dans des sessions de communication.

32. Produit logiciel selon l'une quelconque des revendications 25 à 31, dans lequel les instructions informatiques comprennent, en outre, des instructions pour le contrôle, par le serveur, des paramètres de l'outil de travail par le biais du contrôleur.

33. Procédé pour la communication dans un réseau de communications d'outils de travail (11) comprenant un serveur (10), un noeud de communication (14), une pluralité de contrôleurs d'outils (16) et une pluralité d'outils de travail (18) connectés aux contrôleurs d'outils (16), dans lequel le serveur (12) et les contrôleurs d'outils (16) sont connectés au noeud de communication (14), comprenant :
la réception (S100), par le noeud de communication, d'une demande d'un serveur de s'enregistrer auprès du noeud de communication ;
l'enregistrement (S110) du serveur auprès du noeud de communication ;
la réception (S120), par le noeud de communication, d'une demande des contrôleurs d'outils de s'enregistrer auprès du noeud de communication ;
l'enregistrement (S130) du contrôleur d'outils auprès du noeud de communication ;
l'établissement (S140), par le noeud de communication, d'une session de communication entre le serveur et chaque contrôleur d'outils ;
où le procédé comprend l'attribution, par le noeud de communication, d'un identificateur de session à chaque session de communication, où le procédé comprend en outre l'attribution, par le noeud de communication, d'un identificateur au serveur et à chaque contrôleur enregistré auprès du noeud de communication, et où en outre le procédé comprend l'attribution d'un type à chaque serveur et contrôleur enregistré.

34. Procédé selon la revendication 33 comprenant, en outre, l'énumération, par le noeud de communication, de toutes les entités connectées.

35. Procédé selon l'une quelconque des revendications 33 à 34, comprenant, en outre, le suivi, par le noeud de communication, de toutes les sessions de communication et leur stockage dans une base de données dans le noeud de communication.

36. Procédé selon l'une quelconque des revendications 33 à 35, comprenant, en outre, l'inclusion, par le noeud de communication, d'un identificateur de destination et d'un identificateur de source dans chaque session de communication.

37. Procédé selon l'une quelconque des revendications 33 à 36, dans lequel le noeud de communication est adapté en outre pour tenir un registre de tous les serveurs et contrôleurs qui ont été enregistrés et adapté en outre pour demander à un serveur ou contrôleur enregistré antérieurement de se connecter au noeud de communication.

38. Procédé selon l'une quelconque des revendications 33 à 37, dans lequel le noeud de communication est adapté en outre pour permettre aux serveurs et contrôleurs enregistrés de souscrire à l'état d'autres serveurs et contrôleurs ou types de serveurs et contrôleurs enregistrés.

39. Procédé selon l'une quelconque des revendications 33 à 38, comprenant, en outre, une fonction de réponse pour la réponse à des communications dans les sessions de communication.

40. Procédé selon l'une quelconque des revendications 33 à 39, comprenant, en outre, le contrôle, par le serveur par le biais du noeud de communication, des paramètres de l'outil de travail par le biais du contrôleur.
